# EUROPÄISCHE PATENTSCHRIFT

(11) **EP 4 139 820 B1**
(45) Veröffentlichungstag und Bekanntmachung des Hinweises auf die Patenterteilung: **09.10.2024**
(21) Anmeldenummer: 21735212.9
(22) Anmeldetag: 17.06.2021
(51) Int. Cl.: G06F 21/57

(54) **BOOTEINRICHTUNG FÜR EIN COMPUTERELEMENT UND VERFAHREN ZUM BOOTEN EINES COMPUTERELEMENTS**
BOOT DEVICE FOR A COMPUTER ELEMENT AND METHOD FOR BOOTING A COMPUTER ELEMENT
DISPOSITIF DE REDÉMARRAGE POUR UN ÉLÉMENT INFORMATIQUE ET PROCÉDÉ DE REDÉMARRAGE D'UN ÉLÉMENT INFORMATIQUE

(30) Priorität: 23.06.2020 EP 20181627
(43) Veröffentlichungstag der Anmeldung: 01.03.2023
(73) Patentinhaber: Siemens Aktiengesellschaft, 80333 München (DE)
(72) Erfinder: DE SANTIS, Fabrizio, 80634 München (DE); DICHTL, Markus, 89231 Neu-Ulm (DE); SCHNEIDER, Daniel, 80796 München (DE); SEL, Tolga, 81379 München (DE); ZESCHG, Thomas, 81543 München (DE)
(74) Vertreter: Siemens Patent Attorneys
(86) Internationale Anmeldenummer: PCT/EP2021/066442
(87) Internationale Veröffentlichungsnummer: WO 2021/259759

(56) Entgegenhaltungen:
- US-A1- 2007 067 617
- US-A1- 2007 192 610
- US-B1- 8 560 823

## Beschreibung

Die vorliegende Erfindung betrifft eine Booteinrichtung für ein Computerelement zum Booten des Computerelements. Ferner betrifft die vorliegende Erfindung ein Computerelement mit einer Booteinrichtung, sowie ein Verfahren zum Booten eines Computerelements.

Zum Integritätsschutz eines Computerelements kann es wichtig sein, den Bootvorgang (auch "Startvorgang") des Computerelements sicher zu gestalten, um sicherzustellen, dass beim Booten die erwartete Funktionalität realisiert wird. So wird zum Beispiel im Rahmen eines sicheren Bootvorgangs (Engl. "secure boot") geprüft, ob eine jeweils als nächste geladene Software integer ist. Hierzu kann eine digitale Signatur, ein Hashwert oder dergleichen der geladenen Software ermittelt und geprüft werden, bevor diese ausgeführt wird. Das zur Prüfung der geladenen Software verwendete Schutzverfahren sowie die verwendete digitale Signatur, der verwendete Hashwert oder dergleichen können einen unveränderbaren Programmcode der Booteinrichtung bilden, der durch den Hersteller der Booteinrichtung festgelegt ist. Relevanter Stand der Technik ist in US8560823 zu finden.

Vor diesem Hintergrund besteht eine Aufgabe der vorliegenden Erfindung darin, ein verbessertes Booten eines Computerelements zu ermöglichen.

Gemäß einem ersten Aspekt wird eine Booteinrichtung für ein Computerelement zum Booten des Computerelements vorgeschlagen. Die Booteinrichtung umfasst:
eine Speichereinheit zum Speichern eines Schutzcodes; und
eine Schutzeinheit zur Integritätsprüfung einer Softwarekomponente des Computerelements anhand des Schutzcodes, wobei die Booteinrichtung geeignet ist, die Softwarekomponente zum Booten des Computerelements auszuführen; wobei
der Schutzcode von außerhalb der Booteinrichtung zumindest teilweise veränderbar ist.

Dadurch, dass der Schutzcode zumindest teilweise von außerhalb der Booteinrichtung veränderbar ist, hat ein Nutzer der Booteinrichtung (zum Beispiel ein Endnutzer der Booteinrichtung oder ein Maschinenhersteller, der das Computerelement in seine Maschine integriert) insbesondere die Möglichkeit, sich für ein spezifisches kryptographisches Schutzverfahren zu entscheiden. Der Nutzer der Booteinrichtung kann eine eigene Schutzlösung implementieren, ohne sich auf die vom Hersteller der Booteinrichtung implementierte Lösung verlassen zu müssen. Durch das Verändern des Schutzcodes kann eine eigene Implementierung für die Authentifizierung, Integritätsprüfung und/oder den Vertraulichkeitsschutz der Booteinrichtung definiert werden.

Darüber hinaus ist der Schutzcode aktualisierbar und kann zum Beispiel derart verändert werden, dass ein neuer (veränderter) Schutzcode auch gegenüber neuen Technologien, wie zum Beispiel Quantencomputertechnologien, Schutz bietet. Dadurch kann die Kryptoagilität ermöglicht werden und ein Schutz, den der Schutzcode bietet, kann erhöht werden.

Die Booteinrichtung kann Teil des Computerelements sein. Sie kann auch als Verarbeitungseinrichtung, Rechenvorrichtung oder Prozessvorrichtung bezeichnet werden. Die Booteinrichtung ist insbesondere geeignet, das Computerelement zu Booten. Die Booteinrichtung kann ein Prozessor-Chip, insbesondere ein abgeschlossener Prozessor-Chip, sein. Bei der Booteinrichtung handelt es sich insbesondere um eine nichtzerstörungsfrei zugreifbare Komponente, auf die beispielsweise nur über erlaubte Schnittstellen zerstörungsfrei zugegriffen werden kann.

Unter einem Booten wird insbesondere ein Startprozess, also ein Hochfahren, des Computerelements bezeichnet. Insbesondere wird beim Booten das Betriebssystem des Computerelements geladen. Im Rahmen des Bootens wird zumindest eine Softwarekomponente (Startprogramm-Komponente) geladen und ausgeführt, um das Computerelement zu starten/booten. Bei der Softwarekomponente handelt es sich um Software. Die Softwarekomponente ist beispielsweise ein Bootloader.

Das Computerelement kann ein Computer oder Teil davon sein. Ferner kann das Computerelement ein Gerät mit mehreren Komponenten bezeichnen, die beim Hochfahren des Computerelements geladen werden. Hierzu zählen zum Beispiel IO-Module (input/output Module, auch Ausgabe-/Eingabemodule), CPU-Module (Central Processing Unit Module, auch Prozessormodule), sowie FPGAs (Field Programmable Gate Array, auch programmierbarer Logikgatter). Das Computerelement findet beispielsweise im industriellen Umfeld Anwendung, insbesondere in einem industriellen Automatisierungssystem. Die Möglichkeit, den Schutzcode zu verändern, ist im industriellen Umfeld besonders wichtig, weil dort besonders hohe Anforderungen an die Sicherheit gestellt werden und weil industrielle Geräte häufig über viele Jahre im Feld sind und deren Schutzmechanismen ohne Aktualisierung altern und den Schutz reduzieren.

Der Schutzcode kann als eine Ablaufvorschrift, ein Programmcode und/oder ein ausführbarer Befehl zur Implementierung einer Schutzfunktion betrachtet werden. Der Schutzcode kann durch die Speichereinheit ausgeführt werden, um die Integrität der Softwarekomponente zu prüfen. Die Softwarekomponente ist integer, falls sich nach ihrer Herstellung nicht verändert wurde oder zumindest nicht unzulässig verändert wurde.

Der Schutzcode ist beispielsweise durch einen Nutzer (Endnutzer oder Maschinenhersteller) oder durch eine externe Vorrichtung von außerhalb der Booteinrichtung veränderbar. Veränderbar bedeutet insbesondere, dass ein existierender Schutzcode zumindest teilweise abgeändert, umgeschrieben ergänzt und/oder gelöscht wird. Veränderbar kann auch bedeuten, dass der Schutzcode von außerhalb der Booteinrichtung festlegbar ist. Es ist beispielsweise möglich, einen durch einen Hersteller der Booteinrichtung festgelegten Schutzcode im Feld zu ändern, oder einen initialen Schutzcode im Feld erstmalig festzulegen (falls der Hersteller der Booteinrichtung keinen Schutzcode festgelegt hat).

Bei der Veränderung des Schutzcodes handelt es sich insbesondere um eine durch den Hersteller der Booteinrichtung ermöglichte und durch den Nutzer der Booteinrichtung veranlasste und/oder erwünschte Änderung des Schutzcodes.

Die jeweilige Einheit, insbesondere die Speichereinheit oder die Schutzeinheit, kann hardwaretechnisch und/oder auch softwaretechnisch implementiert sein.

Gemäß einer Ausführungsform umfasst die Speichereinheit zumindest eine eFuse, wobei der Schutzcode durch Einbrennen eines Schutzwerts in die eFuse einmalig beschreibbar ist.

Der Schutzcode wird durch Einbrennen eines Schutzwerts in die eFuse verändert. Die eFuse, auch "electronic fuse" (elektronische Sicherung), bezeichnet einen irreversiblen, unumkehrbaren Teil der Booteinrichtung, die lediglich ein einziges Mal veränderbar (nämlich festlegbar) ist. Zum Festlegen des Schutzcodes mit der eFuse können Bits in die eFuse gebrannt werden. Der Hersteller der Booteinrichtung sieht insbesondere zumindest eine "leere", nicht festgelegte eFuse in der Booteinrichtung vor, die durch den Nutzer brennbar (konfigurierbar) ist.

Gemäß einer weiteren Ausführungsform umfasst der Schutzwert einen Vergleichshashwert und/oder einen kryptographischen Schlüssel, wobei die Schutzeinheit geeignet ist, bei der Integritätsprüfung der Softwarekomponente:
einen Komponentenhashwert der Softwarekomponente mit dem Vergleichshashwert zu vergleichen, und/oder
eine der Softwarekomponente zugeordneten kryptographisch geschützte Information anhand des kryptographischen Schlüssels zu entschlüsseln und/oder zu überprüfen.

Der Schutzwert ist insbesondere eine vertrauenswürdige Information, die zur Integritätsprüfung der Softwarekomponente durch die Schutzeinheit verwendet wird.

Der Komponentenhashwert ist insbesondere ein Hashwert der Softwarekomponente, der der Softwarekomponente zugewiesen ist oder durch die Schutzeinheit ermittelt wird. Der Vergleichshashwert kann ein Hashwert sein, der Teil des Schutzcodes ist und zum Vergleich mit dem Komponentenhashwert dient. Falls der Komponentenhashwert mit dem Vergleichshashwert identisch ist, bestimmt die Schutzeinheit zum Beispiel, dass die Softwarekomponente integer ist.

Der kryptographische Schlüssel kann ein geheimer symmetrischer Schlüssel, ein öffentlicher Schlüssel oder dergleichen sein. Unter dem kryptographischen Schlüssel kann auch ein kryptographischer Prüfwert verstanden werden, der ein Message Authentication Code (MAC, auch "Nachrichtenauthentifizierungscode"), eine digitale Signatur oder dergleichen sein kann.

Gemäß einer weiteren Ausführungsform umfasst der Schutzcode einen veränderbaren kryptographischen Code, insbesondere einen veränderbaren Hashcode, wobei die Schutzeinheit geeignet ist, bei der Integritätsprüfung der Softwarekomponente den veränderbaren Hashcode auszuführen, um einen Hashwertvergleich durchzuführen und/oder den veränderbaren kryptographischen Code auszuführen, um eine kryptographische Verschlüsselung, Entschlüsselung und/oder Prüfung durchzuführen.

Der der kryptographische Code (zum Beispiel der Hashcode) ist insbesondere ein Software-Programmcode, der Teil des Schutzcodes ist und zur Integritätsprüfung ausgeführt wird. Der kryptographische Code definiert insbesondere, gemäß welchem kryptographischen Algorithmus die der Softwarekomponente zugeordneten kryptographisch geschützte Information gehandhabt und/oder hinsichtlich der Integrität der Softwarekomponente geprüft wird.

Der Hashcode definiert dabei insbesondere, wie eine Hashwertprüfung der Softwarekomponente durchgeführt wird. Bei der Hashwertprüfung wird insbesondere ein Hashwert der Softwarekomponente (Komponentenhashwert) gemäß dem Hashcode ermittelt und mit einem Vergleichshashwert verglichen.

Gemäß einer weiteren Ausführungsform ist die Booteinrichtung eingerichtet, die Änderung des Schutzcodes von außerhalb der Booteinrichtung nur zuzulassen, falls:
die Booteinrichtung erkennt, dass die Änderung des Schutzcodes über eine durch einen Hersteller der Booteinrichtung vorgesehene Schnittstelle der Schutzeinheit erfolgt; und/oder
die Booteinrichtung erkennt, dass die Änderung des Schutzcodes gemäß einem vorbestimmten Standard und/oder anhand einer vorbestimmten Änderungsdatei, die durch den Hersteller der Booteinrichtung vorgegeben sind, erfolgt; und/oder
die Booteinrichtung erkennt, dass die Änderung des Schutzcodes mit einem vorbestimmten Konfigurationsgerät vom Hersteller erfolgt; und/oder
die Booteinrichtung lediglich eine einmalige Änderung eines jeweiligen Bereichs des Schutzcodes zulässt und die Booteinrichtung erkennt, dass es sich bei der Änderung um die erste Änderung des Schutzcodes des jeweiligen Bereichs handelt.

Die Booteinrichtung lässt die Änderung insbesondere nur in einem der zuvor genannten Fälle zu. Falls die Booteinrichtung einen Änderungsversuch erkennt, der nicht gemäß einem erlaubten Änderungsprozess erfolgt, kann die Booteinrichtung die Änderung verbieten und/oder ein Warnsignal ausgeben, dass vor einer nicht zulässigen Änderung (oder einem potentiellen Angriff) warnt. Durch diese Maßnahmen kann die Sicherheit der Booteinrichtung erhöht werden, weil nur zugelassene Nutzer Änderungen an dem Schutzcode durchführen können.

Der Hersteller der Booteinrichtung kann zum Beispiel vorschreiben, dass Änderungen des Schutzcodes nur über eine durch einen Hersteller der Booteinrichtung vorgesehene Schnittstelle der Schutzeinheit (zum Beispiel über JTAG, Joint Test Action Group, wobei die Schnittstelle beispielsweise im Betrieb der Booteinrichtung deaktiviert werden kann, zum Beispiel durch eFuses), nur gemäß einem vorbestimmten Standard, anhand einer vom Hersteller bereitgestellten vorbestimmten Änderungsdatei, mit einem vom Hersteller bereitgestellten vorbestimmten Konfigurationsgerät (beispielsweise über JTAG) und/oder einmalig (hierzu kann die Speichereinheit einen einmalig beschreibbaren Bereich, auch OTP - one time programmable Bereich, umfassen) erfolgen dürfen. Es ist auch möglich, das Beschreiben der Speichereinheit und das Verändern des Schutzcodes nur zuzulassen, wenn sich das Computerelement im Konfigurationsmodus befindet und die eFuse noch nicht gebrannt wurde.

Zur Erkennung, ob die Änderung gemäß den beschriebenen Voraussetzungen erfüllt wird, kann in der Speichereinheit ein Änderungsvoraussetzungscode als Programmcode gespeichert sein, der ausgeführt wird, um die Zulässigkeit der Änderung zu prüfen. Der Änderungsvoraussetzungscode ist nicht veränderbar und insbesondere durch den Hersteller der Booteinrichtung festgelegt. Es ist auch denkbar, dass die Speichereinheit selbst Eigenschaften hat, die nur bestimmte Änderungen am Schutzcode zulassen.

Gemäß einer weiteren Ausführungsform ist die Booteinrichtung als ein Computerchip ausgebildet.

Bei dem Computerchip handelt es sich insbesondere um ein Prozessorchip (CPU).

Gemäß einer weiteren Ausführungsform umfasst das Computerelement einen Computer, ein IO-Modul, ein CPU-Modul oder ein FPGA-System, das beim Booten anhand eines Bitstroms als Softwarekomponente konfigurierbar ist.

Gemäß einer weiteren Ausführungsform umfasst die Softwarekomponente Hardware und/oder Software und ist insbesondere ein erster Bootloader-Schritt (Engl.: "first bootloader stage").

Gemäß einer weiteren Ausführungsform umfasst die Booteinrichtung ferner eine Booteinheit zum Ausführen der Softwarekomponente, falls die Schutzeinheit durch die Integritätsprüfung bestimmt, dass die Softwarekomponente alle Integritätserfordernisse erfüllt.

Gemäß einer weiteren Ausführungsform ist die Schutzeinheit geeignet, zur Integritätsprüfung der Softwarekomponente:
einen Signaturverifikationscode mit einem Hashcode der Booteinrichtung zu hashen, um ein erstes Hashergebnis zu erhalten;
das erste Hashergebnis mit einem Signaturverifikationscode-Hashwert der Speichereinheit zu vergleichen;
falls der Vergleich des ersten Hashergebnisses mit dem Signaturverifikationscode-Hashwert ergibt, dass das erste Hashergebnis und der Signaturverifikationscode-Hashwert identisch sind:
   die Softwarekomponente inklusive einer Signatur der Softwarekomponente und eines öffentlichen Schlüssels der Softwarekomponente aus der Softwarekomponente zu erhalten;
   den öffentlichen Schlüssel der Softwarekomponente mit dem Hashcode der Booteinrichtung zum Erhalten eines zweiten Hashergebnisses zu hashen;
   das zweite Hashergebnis mit einem öffentlichen-Schlüssel-Hashwert der Speichereinheit zu vergleichen;
   falls der Vergleich des zweiten Hashergebnisses mit dem öffentlichen-Schlüssel-Hashwert ergibt, dass das zweite Hashergebnis und der öffentliche-Schlüssel-Hashwert identisch sind, die Signatur der Softwarekomponente anhand des Signaturverifikationscodes zu prüfen; und
   falls das Prüfen der Signatur der Softwarekomponente ergibt, dass die Signatur korrekt ist, die Softwarekomponente auszuführen.

Gemäß einer weiteren Ausführungsform ist das Computerelement ein FPGA-System und die Schutzeinheit ist geeignet, zur Integritätsprüfung und/oder Entschlüsselung der Softwarekomponente:
einen authentifizierten Entschlüsselungscode mit einem Hashcode der Booteinrichtung zum Erhalten eines dritten Hashergebnisses zu hashen;
das dritte Hashergebnis mit einem authentifizierten Entschlüsselungscode-Hashwert der Speichereinheit zu vergleichen;
falls der Vergleich des dritten Hashergebnisses mit dem authentifizierten Entschlüsselungscode-Hashwert ergibt, dass das dritte Hashergebnis und der authentifizierte Entschlüsselungscode-Hashwert identisch sind:
   die Softwarekomponente, welche als ein FPGA-Bitstrom ausgebildet ist, inklusive einer Authentifizierungsinformation der Softwarekomponente durch die Booteinrichtung zu erhalten;
   den FPGA-Bitstrom anhand des Authentifizierten Entschlüsselungscodes (und insbesondere anhand eines geheimen symmetrischen Schlüssels) zu entschlüsseln;
   die Authentifizierungsinformation der Softwarekomponente zu prüfen; und
   falls die Prüfung der Authentifizierungsinformation erfolgreich ist, ein FPGA des FPGA-Systems mit dem entschlüsselten Bitstrom zu konfigurieren.

Gemäß einem zweiten Aspekt wird ein Computerelement mit einer Booteinrichtung gemäß dem ersten Aspekt oder gemäß einer Ausführungsform des ersten Aspekts vorgeschlagen.

Die für die vorgeschlagene Booteinrichtung beschriebenen Ausführungsformen und Merkmale gelten für das vorgeschlagene Computerelement entsprechend.

Gemäß einem dritten Aspekt wird ein Verfahren zum Booten eines Computerelements mit einer Booteinrichtung, insbesondere mit einer Booteinrichtung gemäß dem ersten Aspekt oder gemäß einer Ausführungsform des ersten Aspekts, vorgeschlagen. Das Verfahren umfasst:
Speichern eines Schutzcodes;
Durchführen einer Integritätsprüfung einer beim Booten des Computerelements ausgeführten Softwarekomponente des Computerelements anhand des Schutzcodes; und
zumindest teilweises Verändern des Schutzcodes von außerhalb der Booteinrichtung.

Die für die vorgeschlagene Booteinrichtung beschriebenen Ausführungsformen und Merkmale gelten für das vorgeschlagene Verfahren entsprechend.

Gemäß einem vierten Aspekt wird ein Computerprogrammprodukt, umfassend Befehle, die bei der Ausführung des Programms durch eine Booteinrichtung (insbesondere durch eine Booteinrichtung gemäß dem ersten Aspekt oder gemäß einer Ausführungsform des ersten Aspekts) diese veranlassen, das Verfahren gemäß dem dritten Aspekt auszuführen, vorgeschlagen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Computerelement mit einer Booteinrichtung gemäß einer ersten Ausführungsform;
- Fig. 2: zeigt ein Verfahren zum Booten des Computerelements der Fig. 1 gemäß einer ersten Ausführungsform;
- Fig. 3: zeigt ein Verfahren zum Booten des Computerelements der Fig. 1 gemäß einer zweiten Ausführungsform;
- Fig. 4: zeigt ein Computerelement mit einer Booteinrichtung gemäß einer zweiten Ausführungsform;
- Fig. 5: zeigt ein Verfahren zum Booten des Computerelements der Fig. 4;
- Fig. 6: zeigt ein Computerelement mit einer Booteinrichtung gemäß einer dritten Ausführungsform;
- Fig. 7: zeigt ein Verfahren zum Booten des Computerelements der Fig. 6; und
- Fig. 8: zeigt ein Computerelement mit einer Booteinrichtung gemäß einer vierten Ausführungsform.

In den Figuren sind gleiche oder funktionsgleiche Elemente mit denselben Bezugszeichen versehen worden, sofern nichts anderes angegeben ist.

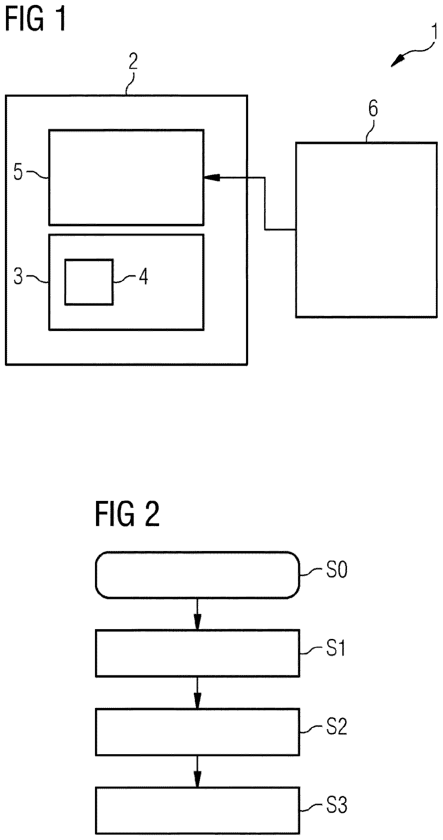

Die Fig. 1 zeigt ein Computerelement 1 mit einer Booteinrichtung 2 gemäß einer ersten Ausführungsform. Das Computerelement 1 umfasst, über die Booteinrichtung 2 hinaus, eine Softwarekomponente 6. Das Computerelement umfasst eine Speichereinheit 3 zum Speichern eines Schutzcodes 4 sowie eine Schutzeinheit 5. Der Pfeil in der Fig. 1 gibt an, dass die Schutzeinheit 5 Zugriff auf die Softwarekomponente 6 hat.

Das Computerelement 1 der Fig. 1 ist ein industrielles Automatisierungssystem. Die Booteinrichtung 2 ist als ein Prozessor (CPU) ausgebildet und dient unter anderem dazu, das Computerelement 1 hochzufahren (zu booten).

Die Eigenschaften der einzelnen Elemente des Computerelements 1 der Fig. 1 werden im Folgenden in Bezug auf die Fig. 2 beschrieben, welche ein Verfahren zum Booten des Computerelements 1 der Fig. 1 gemäß einer ersten Ausführungsform zeigt.

Der Verfahrensschritt S0 bezeichnet den Start des beschriebenen Verfahrens. In einem darauffolgenden Schritt S1 wird der Schutzcode 4 in die Speichereinheit 3 gespeichert. Der Schutzcode 4 wird ursprünglich durch einen Hersteller des Prozessors 2 abgespeichert. Der Schutzcode 4 ist ein Programm, das beim Booten des Computerelements 1 zum Prüfen der Integrität der Softwarekomponente 6 durch die Schutzeinheit 5 ausgeführt wird. Es ist auch möglich, dass der Hersteller des Prozessors 2 keinen initialen Schutzcode 4 speichert, sondern lediglich Speicherplatz in der Speichereinheit 3 vorsieht, die der Nutzer des Prozessors 2 für den Schutzcode 4 nutzen kann.

In einem Schritt S2 wird der Schutzcode 4 von außerhalb des Prozessors 2 zumindest teilweise verändert. Hierzu greift ein Nutzer des Prozessors 2 im Feld auf die Speichereinheit 3 zu und ändert den zuvor gespeicherten Schutzcode 4 ab, damit dieser erwünschten Anforderungen entspricht. Dabei kann der Benutzer sowohl kryptographische Schlüssel, Hashwerte oder dergleichen, die bei der Integritätsprüfung der Softwarekomponente 6 verwendet werden, als auch Programmteile, die den Ablauf der Integritätsprüfung selbst definieren, abändern.

Zum Ändern des Schutzcodes im Schritt S2 des Fig. 2 kann der Nutzer sich einem Gerät bedienen, das der Hersteller des Prozessors 2 für diesen Zweck bereitstellt.

In einem Schritt S3 führt die Schutzeinheit 3 eine Integritätsprüfung der Softwarekomponente 6 durch. Hierzu führt die Schutzeinheit 3 den Schutzcode 4 aus und wendet diesen an Informationen, die Teil der Software der Softwarekomponente 6 sind, durch.

Der Prozessor 2 der Fig. 1 ermöglicht ein flexibles Verändern des Schutzcodes 4 durch den Nutzer, wodurch die Integritätsprüfung der Softwarekomponente 6 mit höherer Sicherheit erfolgt. Der gesamte Bootprozess wird dadurch sicherer gestaltet.

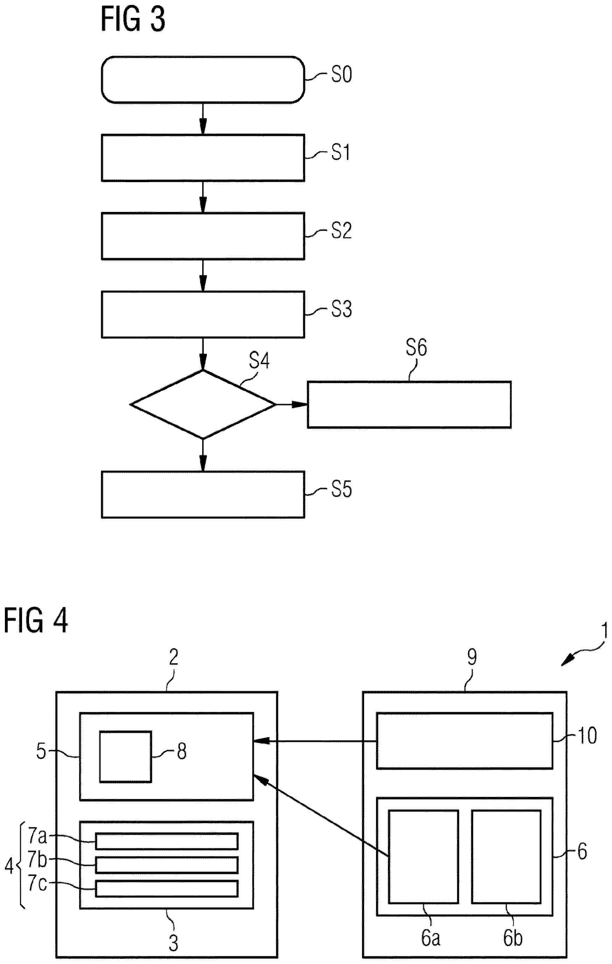

Die Fig. 3 zeigt ein Verfahren zum Booten des Computerelements 1 der Fig. 1 gemäß einer zweiten Ausführungsform. Das Verfahren der Fig. umfasst - ebenso wie das Verfahren der Fig. 2 - die Schritte S0 bis S3. Darüber hinaus umfasst das Verfahren der Fig. 3 die zusätzliche Schritte S4, S5 und S6.

Je nachdem, ob die Schutzeinheit 5 im Integritätsprüfungsschritt S3 bestimmt, dass die Softwarekomponente 6 integer ist oder nicht (Schritt S4), wird entweder der Schritt S5 oder der Schritt S6 durchgeführt. Falls in den Schritte S3 und S4 bestimmt wird, dass die Softwarekomponente 6 integer ist, wird die Softwarekomponente 6 durch die Schutzeinheit 5 oder durch eine zusätzliche Booteinheit (in der Fig. 1 nicht dargestellt) ausgeführt (Schritt S5). Falls in den Schritte S3 und S4 bestimmt wird, dass die Softwarekomponente 6 nicht integer ist, wird im Schritt S6 ein entsprechendes Warnsignal ausgegeben.

Detailliertere Ausgestaltungen des Computerelements 1 und der Booteinrichtung 2 werden im Folgenden anhand der Fig. 4 bis 8 näher beschrieben.

Die Fig. 4 zeigt ein Computerelement 1 mit einer Booteinrichtung 2 gemäß einer zweiten Ausführungsform. Mit der Booteinrichtung 2 der zweiten Ausführungsform (Fig. 4) ist eine Signaturverifikation im ersten Boot-Schritt aktualisierbar, und gegebenenfalls durch ein Quantencomputer-resistentes Signaturverfahren ersetzbar. In der Schutzeinheit 5, welche als Boot-ROM ausgebildet ist, ist ein Hashcode 8 gespeichert, der ein Programm ist, mit dem die Schutzeinheit 5 ein Hashwerttest an der Softwarekomponente 6 durchführt.

Die Softwarekomponente 6 ist im Beispiel der Fig. 4 in einem internen Speicher 9 des Computerelements 1 abgelegt. Im Speicher 9 sind ein Signaturverifikationscode (Signature Verification Code, SVC) 10 sowie die Softwarekomponente 6 abgelegt, welche hier als erster Bootloader-Schritt ausgebildet ist. Die Softwarekomponente 6 umfasst eine zugeordnete Komponentensignatur 6a sowie einen zugeordneten Komponentenschlüssel 6b, der ein öffentlicher Schlüssel ist.

Die Speichereinheit 3 umfasst mehrere eFuses 7a - 7c, die durch den Hersteller des Prozessors 2 leer bereitgestellt werden und durch den Nutzer des Prozessors 2 programmiert werden können und zumindest einen Teil des Schutzcodes 4 bilden. Um den Schutzcode 4 zu ändern, brennt der Nutzer Schutzwerte in die eFuses 7a - 7c. Dies erfolgt vorzugsweise in einer sicheren Umgebung.

Im Beispiel der Fig. 4 hat der Nutzer zum Beispiel einen öffentlichen-Schlüssel-Hashwert in die eFuse 7a und ein Signaturverifikationscode-Hashwert in die eFuse 7b gebrannt. Die eFuse 7c und weitere (nicht dargestellte eFuses) umfassen weitere öffentlichen-Schlüssel-Hashwerte und Signaturverifikationscode-Hashwerte. Alte Hashwerte können entweder automatisch invalidiert werden oder durch Brennen einer dafür vorgesehenen eFuse 7a - 7c.

Parallel zum Aktualisieren der Hashwerte werden auch der Signaturverifikationscode 10, die Komponentensignatur 6a und der Komponentenschlüssel 6b aktualisiert. Die Aktualisierungen, die durch den Prozessor 2 gemäß der zweiten Ausführungsform (Fig. 4) ermöglicht werden, sind vor allem dann relevant, wenn der Kryptoalgorithmus (zum Beispiel ein asymmetrisches Signaturverfahren) des Signaturverifikationscode 10 gebrochen ist oder Schwachstellen hat, nicht jedoch der Hashcode 8.

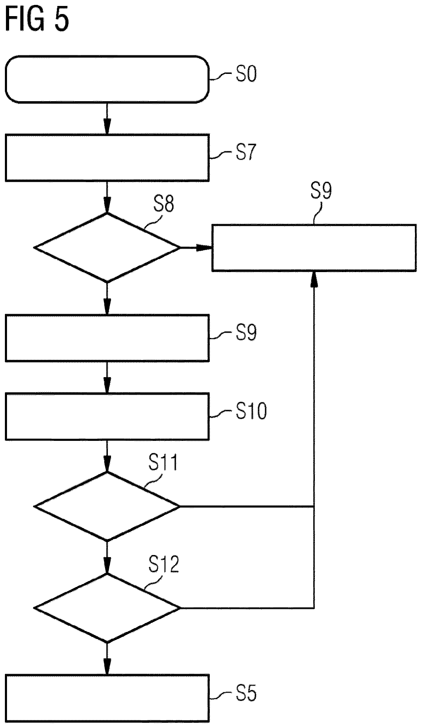

Die Fig. 5 zeigt ein Verfahren zum Booten des Computerelements 1 der Fig. 4. Auch hier wird mit dem Schritt S0 gestartet. In einem Schritt S7 erhält die Schutzeinheit 5 den Signaturverifikationscode 10 von dem Speicher 9 (in der Fig. 4 durch einen Pfeil dargestellt) und hasht diesen mit dem vorgespeicherten Hashcode 8, wodurch ein erstes Hashergebnis (Komponentenhashwert) erhalten wird.

In einem Schritt S8 wird dieses erste Hashergebnis mit dem Signaturverifikationscode-Hashwert der eFuse 7b verglichen. Falls sich bei dem Vergleich ergibt, dass die Hashwerte nicht identisch sind, wird im Schritt S9 ein Fehler gemeldet und das Verfahren wird beendet. Falls sich bei dem Vergleich des Schritts S8 ergibt, dass die Hashwerte identisch sind, wird mit dem Schritt S9 weitergemacht.

In einem Schritt S9 erhält die Schutzeinheit 5 Zugriff auf die Softwarekomponente 6 mit der Komponentensignatur 6a und dem Komponentenschlüssel 6b.

In einem Schritt S10 hasht die Schutzeinheit 5 den öffentlichen Schlüssel 6b, wodurch ein zweites Hashergebnis erhalten wird. In einem Schritt S11 wird überprüft, ob das zweite Hashergebnis und der öffentliche-Schlüssel-Hashwert in der eFuse 7a identisch sind. Wenn sie nicht identisch sind, wird im Schritt S9 ein Fehler gemeldet und das Verfahren wird beendet.

Bei Identität wird im Schritt S12 anhand des Signaturverifikationscodes 10 geprüft, ob die Komponentensignatur 6a gültig ist. Falls im Schritt S12 bestimmt wird, dass die Komponentensignatur 6a nicht gültig ist, wird im Schritt S9 ein Fehler gemeldet und das Verfahren wird beendet. Falls im Schritt S12 bestimmt wird, dass die Komponentensignatur 6a gültig ist, wird im Schritt S5 die Softwarekomponente ausgeführt.

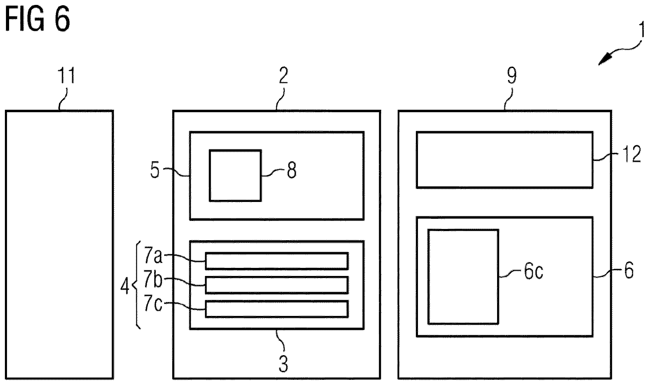

Die Fig. 6 zeigt ein Computerelement 1 mit einer Booteinrichtung 2 gemäß einer dritten Ausführungsform und betrifft den Know-How-Schutz von FPGA-Bitströmen. Üblicherweise werden dafür symmetrische kryptographische Verschlüsselungsverfahren verwendet, die vom Hardwarehersteller fest in die Hardware integriert sind. Der Prozessor 2 der Fig. 6 ermöglicht jedoch die Nutzung eines durch den Nutzer implementierten Verfahrens zur authentifizierten Entschlüsselung. Hierzu erfolgt ein Brennen des geheimen Schlüssels in eFuses durch den Benutzer. Dies wird im Folgenden näher erläutert. Das Computerelement 1 ist hier ein FPGA-System mit einem FPGA 11, einem Prozessor 2 und einem Speicher 9.

Im Speicher 9 ist ein FPGA-Bitstrom 6 als Softwarekomponente gespeichert, welcher eine Authentifizierungsinformation 6c (Engl. "Authentication tag") umfasst, sowie ein authentifizierter Entschlüsselungscode 12 (Engl. "Authenticated decryption code"). Der FPGA-Bitstrom 6 ist verschlüsselt und wird beim Starten des Computerelements 1 durch die Booteinrichtung 2 entschlüsselt und verwendet, um die FPGA 11 zu konfigurieren.

Der Prozessor 2 der Fig. 6 ist identisch zum Prozessor 2 aus der Fig. 4 ausgeführt, wobei die in den eFuses 7a - 7b gespeicherte Schutzwerte jedoch andere sind. Im Beispiel der Fig. 6 ist in der eFuse 7a ein geheime symmetrische Schlüssel und in der eFuse 7b ein Authentifizierten Entschlüsselungscode-Hashwert gespeichert. Die eFuse 7c und weitere (nicht dargestellte eFuses) umfassen weitere geheime symmetrische Schlüssel und authentifizierte Entschlüsselungscode-Hashwerte. Die Schutzwerte, die die eFuses 7a - 7c enthalten, sind im Feld von außerhalb des Prozessors 2 festlegbar. Alte Hashwerte und Schlüssel können entweder automatisch invalidiert werden oder durch Brennen einer dafür vorgesehenen eFuse 7a - 7c.

Im Unterschied zur Booteinrichtung der zweiten Ausführungsform (Fig. 4), muss bei symmetrischer Kryptographie der geheime symmetrische Schlüssel komplett in eFuses 7a - 7c (nicht auslesbar von außerhalb) gespeichert werden. Deshalb ist für den geheimen symmetrischen Schlüssel vorzugsweise eine variable Länge möglich, da die Schlüssellänge mit dem gewählten Verfahren und dem gewählten Sicherheitsniveau zusammenhängt.

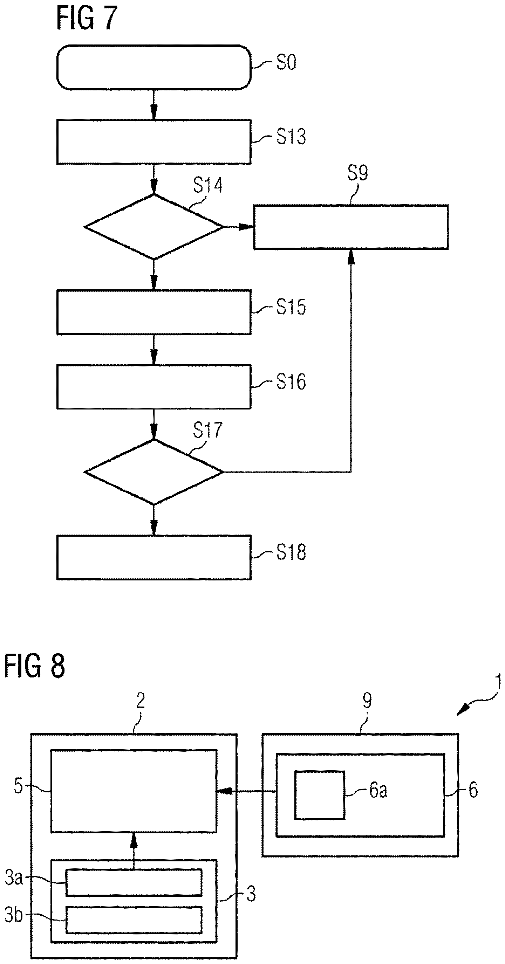

Die Fig. 7 zeigt ein Verfahren zum Booten des Computerelements 1 der Fig. 6. Auch hier wird mit dem Schritt S0 gestartet. In einem Schritt S13 wird der authentifizierte Entschlüsselungscode 12 mit dem Hashcode 8 gehasht, wodurch ein drittes Hashergebnis erhalten wird.

In einem Schritt S14 wird das dritte Hashergebnis mit dem authentifizierten Entschlüsselungscode-Hashwert aus der eFuse 7b verglichen. Sind die im Schritt S14 verglichenen Hashwerte nicht identisch, wird im Schritt S9 ein Fehler gemeldet und das Verfahren wird beendet. Sind die im Schritt S14 verglichenen Hashwerte identisch, erhält die Schutzeinheit 5 Zugriff auf den FPGA-Bitstrom 6 und der darin enthaltenen Authentifizierungsinformation 6c (Schritt S15 der Fig. 7).

In einem Schritt S16 entschlüsselt die Schutzeinheit 5 den FPGA-Bitstrom 6 anhand des authentifizierten Entschlüsselungscodes 12 mithilfe des geheimen symmetrischen Schlüssels in der eFuse 7a und berechnet eine Vergleichsauthentifizierungsinformation. In einem Schritt S17 vergleicht die Schutzeinheit 5 die Authentifizierungsinformation 6c mit der Vergleichsauthentifizierungsinformation (Prüfung der Authentifizierungsinformation). Ergibt die Prüfung im Schritt S17 eine Abweichung, wird im Schritt S9 ein Fehler gemeldet und das Verfahren wird beendet. Ergibt die Prüfung im Schritt S17, dass die Authentifizierungsinformation 6c identisch zur Vergleichsauthentifizierungsinformation ist, konfiguriert die Schutzeinheit 5 im Schritt S18 das FPGA 11 mit dem entschlüsselten FPGA-Bitstrom 6.

Die Fig. 8 zeigt ein Computerelement 1 mit einer Booteinrichtung 2 gemäß einer vierten Ausführungsform. Mit den Booteinrichtungen 2 der zweiten und dritten Ausführungsformen (Fig. 4 und 6) war es möglich gewesen, Hashwerte und kryptographische Schlüssel, die Teil des Schutzcodes 4 bilden, von außerhalb der Booteinrichtung 2 zu verändern, während der Hashcode 8 unveränderbar vorlag.

Mit der Booteinrichtung 2 (Prozessor) gemäß der vierten Ausführungsform ist es möglich, auch einen Hashcode oder einen entsprechenden kryptographischen Code zu verändern (veränderbarer Hashcode, veränderbarer kryptographische Code). Hierzu umfasst die Speichereinheit 3 mehrere Speicherbereiche 3a, 3b, von denen in der Fig. 8 nur zwei dargestellt sind. In diese Speicherbereiche 3a, 3b können von außerhalb der Booteinrichtung 2 der Hashcode 8, ein kryptographischer Code, der Signaturverifikationscode 10, der authentifizierte Entschlüsselungscode 12 oder allgemeine "root-of-trust Funktionen" festgelegt und verändert werden.

Die Speicherbereiche 3a, 3b können einmalig beschreibbar sein und zum Beispiel als programmierbare Nur-Lese-Speicher (Programmable Read-Only Memory, PROM) ausgebildet sein. Alternativ sind wiederbeschreibbare Speicher verwendbar, welche insbesondere speziell zugriffsbeschränkt für Schreibzugriffe sind. Die Speicherbereiche 3a, 3b lassen Änderungen zum Beispiel nur zu, falls die Änderung gemäß einem erlaubten Änderungsprozess erfolgt, nämlich zum Beispiel nur über eine durch einen Hersteller der Booteinrichtung vorgesehene Schnittstelle (zum Beispiel über JTAG, Joint Test Action Group, wobei die Schnittstelle beispielsweise im Betrieb der Booteinrichtung deaktiviert werden kann, zum Beispiel durch eFuses); nur gemäß einem vorbestimmten Standard, anhand einer vom Hersteller bereitgestellten vorbestimmten Änderungsdatei; nur mit einem vom Hersteller bereitgestellten vorbestimmten Konfigurationsgerät (beispielsweise über JTAG) und/oder einmalig erfolgen dürfen. Es ist auch möglich, das Beschreiben der Speichereinheit 5 und das Verändern des Schutzcodes 4 nur zuzulassen, wenn sich das Computerelement 1 im Konfigurationsmodus befindet und die eFuse 7a - 7c noch nicht gebrannt wurde.

Im Beispiel der Fig. 8 wird in dem Speicherbereich 3a ein Signaturverifikationscode 10 sowie ein zugehöriger öffentlicher Schlüssel abgelegt. Das Booten erfolgt anhand des Prozessors 2 der Fig. 8 analog zum anhand der Fig. 4 bis 7 beschriebenen Bootvorgängen.

Obwohl die vorliegende Erfindung anhand von Ausführungsbeispielen beschrieben wurde, ist sie vielfältig modifizierbar. Es ist zum Beispiel möglich, einzelne Aspekte der anhand der Figuren beschriebenen Ausführungsformen je nach Anwendung zu kombinieren. Der beschriebene Speicher 9 ist Teil der Booteinrichtung 2 (interner Speicher), aber er kann auch außerhalb der Booteinrichtung 2 vorliegen (externer Speicher).

### Bezugszeichenliste

- 1: Computerelement
- 2: Booteinrichtung
- 3: Speichereinheit
- 3a, 3b: Speicherbereich
- 4: Schutzcode
- 5: Schutzeinheit
- 6: Softwarekomponente
- 6a: Komponentensignatur
- 6b: Komponentenschlüssel
- 6c: Authentifizierungsinformation
- 7a - 7c: eFuse
- 8: Hashcode
- 9: Speicher
- 10: Signaturverifikationscode
- 11: FPGA
- 12: authentifizierter Entschlüsselungscode

- S0 - S18: Verfahrensschritte

## Patentansprüche

1. Booteinrichtung (2) für ein Computerelement (1) zum Booten des Computerelements (1), wobei die Booteinrichtung (2) umfasst:
eine Speichereinheit (3) zum Speichern eines Schutzcodes (4); und
eine Schutzeinheit (5) zur Integritätsprüfung einer Softwarekomponente (6) des Computerelements (1) anhand des Schutzcodes (4), wobei die Booteinrichtung (2) geeignet ist, die Softwarekomponente (6) zum Booten des Computerelements (1) auszuführen; wobei
der Schutzcode (4) von außerhalb der Booteinrichtung (2) zumindest teilweise veränderbar ist,
wobei die Booteinrichtung eingerichtet ist, die Änderung des Schutzcodes (4) von außerhalb der Booteinrichtung (2) nur zuzulassen, falls:
die Booteinrichtung (2) erkennt, dass die Änderung des Schutzcodes (4) über eine durch einen Hersteller der Booteinrichtung (2) vorgesehene Schnittstelle der Schutzeinheit (5) erfolgt; und/oder
die Booteinrichtung (2) erkennt, dass die Änderung des Schutzcodes (4) mit einem vorbestimmten Konfigurationsgerät vom Hersteller erfolgt; und/oder
die Booteinrichtung (2) lediglich eine einmalige Änderung eines jeweiligen Bereichs des Schutzcodes (4) zulässt und die Booteinrichtung (2) erkennt, dass es sich bei der Änderung um die erste Änderung des Schutzcodes (4) des jeweiligen Bereichs handelt.

2. Booteinrichtung nach Anspruch 1, wobei die Speichereinheit (3) zumindest eine eFuse (7a - 7c) umfasst, und wobei der Schutzcode (4) durch Einbrennen eines Schutzwerts in die eFuse (7a - 7c) einmalig beschreibbar ist.

3. Booteinrichtung nach Anspruch 2, wobei der Schutzwert einen Vergleichshashwert und/oder einen kryptographischen Schlüssel umfasst, und
wobei die Schutzeinheit (5) geeignet ist, bei der Integritätsprüfung der Softwarekomponente (6):
einen Komponentenhashwert der Softwarekomponente (6) mit dem Vergleichshashwert zu vergleichen, und/oder
eine der Softwarekomponente (6) zugeordneten kryptographisch geschützte Information anhand des kryptographischen Schlüssels zu entschlüsseln und/oder zu überprüfen.

4. Booteinrichtung nach einem der Ansprüche 1 bis 3, wobei der Schutzcode (4) einen veränderbaren kryptographischen Code, insbesondere einen veränderbaren Hashcode, umfasst, und wobei die Schutzeinheit (5) geeignet ist, bei der Integritätsprüfung der Softwarekomponente (6) den veränderbaren Hashcode auszuführen, um einen Hashwertvergleich durchzuführen und/oder den veränderbaren kryptographischen Code auszuführen, um eine kryptographische Verschlüsselung, Entschlüsselung und/oder Prüfung durchzuführen.

5. Booteinrichtung nach einem der Ansprüche 1 bis 4, die eingerichtet ist, die Änderung des Schutzcodes (4) von außerhalb der Booteinrichtung (2) nur zuzulassen, falls
die Booteinrichtung (2) erkennt, dass die Änderung des Schutzcodes (4) gemäß einem vorbestimmten Standard und/oder anhand einer vorbestimmten Änderungsdatei, die durch den Hersteller der Booteinrichtung (2) vorgegeben sind, erfolgt.

6. Booteinrichtung nach einem der Ansprüche 1 bis 5, welche als ein Computerchip ausgebildet ist.

7. Booteinrichtung nach einem der Ansprüche 1 bis 6, wobei das Computerelement (1) einen Computer, ein IO-Modul, ein CPU-Modul, oder ein FPGA-System, das beim Booten anhand eines Bitstroms als Softwarekomponente (6) konfigurierbar ist, umfasst.

8. Booteinrichtung nach einem der Ansprüche 1 bis 7, wobei die Softwarekomponente (6) Hardware und/oder Software umfasst und insbesondere ein erster Bootloader-Schritt (Engl.: "first boatloader stage") ist.

9. Booteinrichtung nach einem der Ansprüche 1 bis 8, ferner umfassend:
eine Booteinheit zum Ausführen der Softwarekomponente (6), falls die Schutzeinheit (5) durch die Integritätsprüfung bestimmt, dass die Softwarekomponente (6) alle Integritätserfordernisse erfüllt.

10. Booteinrichtung nach einem der Ansprüche 1 bis 9, wobei die Schutzeinheit (5) geeignet ist, zur Integritätsprüfung der Softwarekomponente (6):
einen Signaturverifikationscode (10) mit einem Hashcode (8) der Booteinrichtung (2) zu hashen, um ein erstes Hashergebnis zu erhalten;
das erste Hashergebnis mit einem Signaturverifikationscode-Hashwert der Speichereinheit (3) zu vergleichen;
falls der Vergleich des ersten Hashergebnisses mit dem Signaturverifikationscode-Hashwert ergibt, dass das erste Hashergebnis und der Signaturverifikationscode-Hashwert identisch sind:
die Softwarekomponente (6) inklusive einer Signatur (6a) der Softwarekomponente (6) und eines öffentlichen Schlüssels (6b) der Softwarekomponente (6) zu erhalten;
den öffentlichen Schlüssel (6b) der Softwarekomponente (6) mit dem Hashcode der Booteinrichtung (2) zum Erhalten eines zweiten Hashergebnisses zu hashen;
das zweite Hashergebnis mit einem öffentlichen-Schlüssel-Hashwert der Speichereinheit (3) zu vergleichen;
falls der Vergleich des zweiten Hashergebnisses mit dem öffentlichen-Schlüssel-Hashwert ergibt, dass das zweite Hashergebnis und der öffentliche-Schlüssel-Hashwert identisch sind, die Signatur (6a) der Softwarekomponente (6) anhand des Signaturverifikationscodes (10) zu prüfen; und
falls das Prüfen der Signatur (6a) der Softwarekomponente (6) ergibt, dass die Signatur korrekt ist, die Softwarekomponente (6) auszuführen.

11. Booteinrichtung nach einem der Ansprüche 1 bis 9, wobei das Computerelement (1) ein FPGA-System ist und die Schutzeinheit (5) geeignet ist, zur Integritätsprüfung und/oder Entschlüsselung der Softwarekomponente (6):
einen authentifizierten Entschlüsselungscode (12) mit einem Hashcode (8) der Booteinrichtung (2) zum Erhalten eines dritten Hashergebnisses zu hashen;
das dritte Hashergebnis mit einem authentifizierten Entschlüsselungscode-Hashwert der Speichereinheit (3) zu vergleichen;
falls der Vergleich des dritten Hashergebnisses mit dem authentifizierten Entschlüsselungscode-Hashwert ergibt, dass das dritte Hashergebnis und der authentifizierten Entschlüsselungscode-Hashwert identisch sind:
die Softwarekomponente (6), welche als ein FPGA-Bitstrom ausgebildet ist, inklusive einer Authentifizierungsinformation (6c) der Softwarekomponente (6) durch die Booteinrichtung (2) zu erhalten;
den FPGA-Bitstrom (6) anhand des authentifizierten Entschlüsselungscodes (12) zu entschlüsseln;
die Authentifizierungsinformation (6c) der Softwarekomponente (6) zu prüfen; und
falls die Prüfung der Authentifizierungsinformation (6c) erfolgreich ist, ein FPGA (11) des FPGA-Systems (1) mit dem entschlüsselten Bitstrom (6) zu konfigurieren.

12. Computerelement (1) mit einer Booteinrichtung (2) nach einem der Ansprüche 1 bis 11.

13. Verfahren zum Booten eines Computerelements (1) mit einer Booteinrichtung (2) nach einem der Ansprüche 1 bis 11, wobei das Verfahren umfasst:
Speichern (S1) eines Schutzcodes (4);
Durchführen (S3) einer Integritätsprüfung einer beim Booten des Computerelements (1) ausgeführten Softwarekomponente (6) des Computerelements (1) anhand des Schutzcodes (4); und
zumindest teilweises Verändern (S2) des Schutzcodes (4) von außerhalb der Booteinrichtung (2).

14. Computerprogrammprodukt, umfassend Befehle, die bei der Ausführung des Programms durch eine Booteinrichtung (2) diese veranlassen, das Verfahren nach Anspruch 13 auszuführen.

## Claims

1. Booting device (2) for a computer element (1), for booting the computer element (1), wherein the booting device (2) comprises:
a memory unit (3) for storing a protection code (4); and
a protection unit (5) for checking the integrity of a software component (6) of the computer element (1) by reference to the protection code (4), wherein the booting device (2) is appropriate for executing the software component (6) to boot the computer element (1); wherein
the protection code (4) can be at least partially changed from outside the booting device (2),
wherein the booting device is designed only to permit the alteration of the protection code (4) from outside the booting device (2) in the event that:
the booting device (2) detects that the alteration of the protection code (4) is executed via an interface of the protection unit (5) which is provided by a manufacturer of the booting device (2); and/or
the booting device (2) detects that the alteration of the protection code (4) is executed using a predefined configuration device of the manufacturer; and/or
the booting device (2) only permits a one-time alteration of a respective region of the protection code (4), and the booting device (2) detects that the alteration is the first alteration of the protection code (4) in the respective region.

2. Booting device according to Claim 1, wherein the memory unit (3) comprises at least one eFuse (7a - 7c), and wherein the protection code (4) is programable on a one-time basis by the burn-in of a protection value in the eFuse (7a - 7c).

3. Booting device according to Claim 2, wherein the protection value comprises a comparative hash value and/or a cryptographic key, and
wherein the protection unit (5) is appropriate, in conjunction with the integrity check of the software component (6):
for a comparison of a component hash value of the software component (6) with the comparative hash value, and/or
for the decryption and/or checking of cryptographically protected information assigned to the software component (6), by reference to the cryptographic key.

4. Booting device according to one of Claims 1 to 3, wherein the protection code (4) comprises an editable cryptographic code, particularly an editable hash code, and wherein the protection unit (5) is suitable, in conjunction with the integrity check of the software component (6), for running the editable hash code in order to execute a hash value comparison, and/or for running the editable cryptographic code in order to execute a cryptographic encryption, decryption and/or check.

5. Booting device according to one of Claims 1 to 4, which is designed only to permit the alteration of the protection code (4) from outside the booting device (2) in the event that
the booting device (2) detects that the alteration of the protection code (4) is executed in accordance with a predefined standard and/or by reference to a predefined amendment file, which is/are stipulated by the manufacturer of the booting device (2).

6. Booting device according to one of Claims 1 to 5, which is configured in the form of a computer chip.

7. Booting device according to one of Claims 1 to 6, wherein the computer element (1) comprises a computer, an I/O module, a CPU module or an FPGA system which, upon booting, is configurable in the form of a software component (6) by reference to a bitstream.

8. Booting device according to one of Claims 1 to 7, wherein the software component (6) comprises hardware and/or software and, in particular, is a first bootloader stage.

9. Booting device according to one of Claims 1 to 8, further comprising:
a booting unit for executing the software component (6) in the event that the protection unit (5) determines, by means of the integrity check, that the software component (6) fulfils all requirements for integrity.

10. Booting device according to one of Claims 1 to 9, wherein the protection unit (5) is appropriate, in order to check the integrity of the software component (6):
for hashing of a signature verification code (10) with a hash code (8) of the booting device (2), in order to obtain a first hash result;
for comparison of the first hash result with a signature verification code hash value of the memory unit (3);
in the event that the comparison of the first hash result with the signature verification code hash value confirms that the first hash result and the signature verification code hash value are identical:
for acquisition of the software component (6), including a signature (6a) of the software component (6) and a public key (6b) for the software component (6);
for hashing of the public key (6b) of the software component (6) with the hash code of the booting device (2), in order to obtain a second hash result;
for comparison of the second hash result with a public key hash value of the memory unit (3);
in the event that the comparison of the second hash result with the public key hash value confirms that the second hash result and the public key hash value are identical, for checking of the signature (6a) of the software component (6) by reference to the signature verification code (10); and
in the event that the check of the signature (6a) of the software component (6) confirms that the signature is correct, for execution of the software component (6).

11. Booting device according to one of Claims 1 to 9, wherein the computer element (1) is an FPGA system and the protection unit (5) is appropriate, in order to check the integrity of and/or decrypt the software component (6):
for hashing of an authenticated decryption code (12) with a hash code (8) of the booting device (2), in order to obtain a third hash result;
for comparison of the third hash result with an authenticated decryption code hash value of the memory unit (3);
in the event that the comparison of the third hash result with the authenticated decryption code hash value confirms that the third hash result and the authenticated decryption code hash value are identical:
for acquisition of the software component (6), which is configured in the form of an FPGA bitstream, including authentication information (6c) for the software component (6), by the booting device (2);
for decryption of the FPGA bitstream (6) by reference to the authenticated decryption code (12);
for checking of the authentication information (6c) for the software component (6); and
in the event that the check of the authentication information (6c) is successful, for configuration of an FPGA (11) of the FPGA system (1) using the decrypted bitstream (6).

12. Computer element (1) having a booting device (2) according to one of Claims 1 to 11.

13. Method for booting a computer element (1) having a booting device (2) according to one of Claims 1 to 11, wherein the method comprises:
saving (S1) of a protection code (4);
execution (S3) of an integrity check on a software component (6) of the computer element (1) which is run upon the booting of the computer element (1), by reference to the protection code (4); and
at least partial alteration (S2) of the protection code (4) from outside the booting device (2).

14. Computer program product, comprising instructions which, upon the running of the program by a booting device (2), initiate the execution by the latter of the method according to Claim 13.

## Revendications

1. Dispositif de démarrage (2) pour un élément d'ordinateur (1) pour démarrer l'élément d'ordinateur (1), dans lequel le dispositif de démarrage (2) comprend :
une unité de mémoire (3) pour enregistrer un code de protection (4) ; et
une unité de protection (5) pour vérifier l'intégrité d'un composant logiciel (6) de l'élément d'ordinateur (1) à l'aide du code de protection (4), dans lequel le dispositif de démarrage (2) est approprié pour exécuter le composant logiciel (6) pour démarrer l'élément d'ordinateur (1) ; dans lequel
le code de protection (4) peut être modifié au moins partiellement depuis l'extérieur du dispositif de démarrage (2), dans lequel le dispositif de démarrage est configuré pour autoriser uniquement la modification du code de protection (4) depuis l'extérieur du dispositif de démarrage (2), si :
le dispositif de démarrage (2) reconnaît que la modification du code de protection (4) se fait par le biais d'une interface, prévue par un fabricant du dispositif de démarrage (2), de l'unité de protection (5) ; et/ou
le dispositif de démarrage (2) reconnaît que la modification du code de protection (4) se fait avec un appareil de configuration prédéterminé du fabricant ; et/ou
le dispositif de démarrage (2) autorise uniquement une seule modification d'une zone respective du code de protection (4) et le dispositif de démarrage (2) reconnaît qu'il s'agit lors de la modification de la première modification du code de protection (4) de la zone respective.

2. Dispositif de démarrage selon la revendication 1, dans lequel l'unité de mémoire (3) comprend au moins un fusible électronique (7a - 7c), et dans lequel le code de protection (4) peut être décrit une seule fois en gravant une valeur de protection dans le fusible électronique (7a - 7c).

3. Dispositif de démarrage selon la revendication 2, dans lequel la valeur de protection comprend une valeur de hachage de comparaison et/ou une clé cryptographique, et
dans lequel l'unité de protection (5) est appropriée, lors de la vérification d'intégrité du composant logiciel (6) :
pour comparer une valeur de hachage de composant du composant logiciel (6) à la valeur de hachage de comparaison, et/ou
pour décoder et/ou pour vérifier une information protégée cryptographiquement affectée au composant logiciel (6) à l'aide de la clé cryptographique.

4. Dispositif de démarrage selon l'une des revendications 1 à 3, dans lequel le code de protection (4) comprend un code cryptographique modifiable, plus particulièrement un code de hachage modifiable, et dans lequel l'unité de protection (5) est appropriée pour exécuter le code de hachage modifiable lors de la vérification d'intégrité du composant logiciel (6), pour effectuer une comparaison de valeur de hachage et/ou exécuter le code cryptographique modifiable, pour effectuer un codage, un décodage et/ou une vérification cryptographique.

5. Dispositif de démarrage selon l'une des revendications 1 à 4, qui est configuré pour autoriser la modification du code de protection (4) depuis l'extérieur du dispositif de démarrage (2), uniquement si
le dispositif de démarrage (2) reconnaît que la modification du code de protection (4) se fait selon une norme prédéterminée et/ou à l'aide d'un fichier de modification prédéterminé qui sont prédéfinis par le fabricant du dispositif de démarrage (2).

6. Dispositif de démarrage selon l'une des revendications 1 à 5, lequel est conçu comme une puce d'ordinateur.

7. Dispositif de démarrage selon l'une des revendications 1 à 6, dans lequel l'élément d'ordinateur (1) comprend un ordinateur, un module IO, un module CPU, ou un système FPGA, qui peut être configuré lors du démarrage à l'aide d'un train de bits comme composant logiciel (6).

8. Dispositif de démarrage selon l'une des revendications 1 à 7, dans lequel le composant logiciel (6) comprend du matériel et/ou logiciel et est, plus particulièrement, une première étape de chargement de démarrage (en anglais : «first bootloader stage»).

9. Dispositif de démarrage selon l'une des revendications 1 à 8, comprenant, en outre :
une unité de démarrage pour exécuter le composant logiciel (6), si l'unité de protection (5) détermine par la vérification de l'intégrité, que le composant logiciel (6) remplit toutes les exigences d'intégrité.

10. Dispositif de démarrage selon l'une des revendications 1 à 9, dans lequel l'unité de protection (5) est appropriée pour vérifier l'intégrité du composant logiciel (6) :
pour hacher un code de vérification de signature (10) avec un code de hachage (8) du dispositif de démarrage (2), pour obtenir un premier résultat de hachage ;
pour comparer le premier résultat de hachage à une valeur de hachage de code de vérification de signature de l'unité de mémoire (3) ;
s'il résulte de la comparaison du premier résultat de hachage à la valeur de hachage du code de vérification de signature que le premier résultat de hachage et la valeur de hachage du code de vérification de signature sont identiques :
obtenir le composant logiciel (6) incluant une signature (6a) du composant logiciel (6) et une clé publique (6b) du composant logiciel (6) ;
hacher la clé publique (6b) du composant logiciel (6) avec le code de hachage du dispositif de démarrage (2) afin d'obtenir un deuxième résultat de hachage ;
comparer le deuxième résultat de hachage à une valeur de hachage de clé publique de l'unité de mémoire (3) ;
s'il résulte de la comparaison du deuxième résultat de hachage à la valeur de hachage de clé publique, que le deuxième résultat de hachage et la valeur de hachage de clé publique sont identiques, vérifier la signature (6a) du composant logiciel (6) à l'aide du code de vérification de signature (10) ; et
s'il résulte de la vérification de la signature (6a) du composant logiciel (6) que la signature est correcte, exécuter le composant logiciel (6).

11. Dispositif de démarrage selon l'une des revendications 1 à 9, dans lequel l'élément d'ordinateur (1) est un système FPGA et l'unité de protection (5) est appropriée pour vérifier l'intégrité et/ou le décodage du composant logiciel (6) :
pour hacher un code de décodage authentifié (12) avec un code de hachage (8) du dispositif de démarrage (2) afin d'obtenir un troisième résultat de hachage ;
pour comparer le troisième résultat de hachage à une valeur de hachage de code de décodage authentifié de l'unité de mémoire (3) ;
s'il résulte de la comparaison du troisième résultat de hachage à la valeur de hachage de code de décodage authentifié que le troisième résultat de hachage et la valeur de hachage de code de décodage authentifié sont identiques :
obtenir le composant logiciel (6), lequel est conçu comme un train de bits FPGA, incluant une information d'authentification (6c) du composant logiciel (6) par le dispositif de démarrage (2) ;
décoder le train de bits FPGA (6) à l'aide du code de décodage authentifié (12) ;
vérifier l'information d'authentification (6c) du composant logiciel (6) : et
si la vérification de l'information d'authentification (6c) est fructueuse, configurer un FPGA (11) du système FPGA (1) avec le train de bits décodé (6).

12. Élément d'ordinateur (1) avec un dispositif de démarrage (2) selon l'une des revendications 1 à 11.

13. Procédé de démarrage d'un élément d'ordinateur (1) avec un dispositif de démarrage (2) selon l'une des revendications 1 à 11, dans lequel le procédé comprend :
l'enregistrement (S1) d'un code de protection (4) ;
la réalisation (S3) d'une vérification d'intégrité d'un composant logiciel (6) de l'élément d'ordinateur (1) exécuté lors du démarrage de l'élément d'ordinateur (1) à l'aide du code de protection (4) ; et
la modification au moins partielle (S2) du code de protection (4) depuis l'extérieur du dispositif de démarrage (2) .

14. Produit de programme informatique, comprenant des instructions qui, lors de l'exécution du programme par un dispositif de démarrage (2), incitent celui-ci à exécuter le procédé selon la revendication 13.
